(19) Europäisches Patentamt
European Patent Office
Office européen des brevets

(11) Veröffentlichungsnummer: **0 643 102 A2**

# (12) EUROPÄISCHE PATENTANMELDUNG

(21) Anmeldenummer: **94113850.5**

(51) Int. Cl.[6]: **C08L 25/04**

(22) Anmeldetag: **03.09.94**

(30) Priorität: **13.09.93 DE 4330969**

(43) Veröffentlichungstag der Anmeldung: **15.03.95 Patentblatt 95/11**

(84) Benannte Vertragsstaaten: **BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Gunesin, Binnur, Dr.**
**Rue Des Fahys**
**CH-2000 Neuchatel (CH)**
Erfinder: **Lux, Martin, Dr.**
**Mainstrasse 4**
**D-67125 Dannstadt-Schauernheim (DE)**
Erfinder: **McKee, Graham Edmund, Dr.**
**Kastanienweg 8**
**D-69469 Weinheim (DE)**

## (54) Syndiotaktisches Polystyrol und daraus erhaltene Mischungen.

(57) Polystyrolmischungen, umfassend

a) 80 bis 99 Gew.-% eines syndiotaktischen Homopolymerisats des Styrols oder eines Copolymerisats aus Styrol und weiteren, einpolymerisierten, ungesättigten Comonomeren, und

b) 1 bis 20 Gew.-% eines Blockcopolymerisats aus wenigstens zwei Monomerblöcken oder eines sternförmiges Blockcopolymerisats aus vinylaromatischen Monomeren einerseits und einem konjugierten Dien oder tert. Butyl-Styrol andererseits.

Das syndiotaktische Polystyrol kann durch Ausfällen aus diesen Polystyrolmischungen mit Hilfe von organischen Lösungsmitteln gewonnen werden.

EP 0 643 102 A2

Die vorliegende Erfindung betrifft

Polystyrolmischungen, umfassend

a) 80 bis 99 Gew.-% eines syndiotaktischen Homopolymerisats des Styrols oder eines Copolymerisats aus Styrol und weiteren einpolymerisierten ungesättigten Comonomeren, und

b) 1 bis 20 Gew.-% eines Blockcopolymerisats aus wenigstens zwei Monomerblöcken oder aus einem sternförmigen Blockcopolymerisats aus vinylaromatischen Monomeren einerseits und einem konjugierten Dien oder tert. Butyl-Styrol andererseits.

Weiterhin betrifft die vorliegende Erfindung ein Verfahren zur Herstellung von derartigen Polystyrolmischungen sowie ein Verfahren zur Herstellung von syndiotaktischem Polystyrol.

Hochmolekulare, lineare Blockcopolymerisate aus Blöcken von polymerisiertem Styrol einerseits und polymerisierten konjugierten Dienen andererseits, werden u.a. in der US-A 4,871,814 und der US-A 4,985,505 beschrieben. Die Herstellung derartiger Blockcopolymerisate erfolgt dabei durch anionische Dispersionspolymerisation in einem Kohlenwasserstoff unter ansonsten üblichen Bedingungen. Die dabei erhaltenen Blockcopolymerisate zeichnen sich vor allem durch gute physikalische Eigenschaften, insbesondere hinsichtlich ihrer Dehnbarkeit und Schlagzähigkeit aus.

Weiterhin ist bekannt, Polymerisate des Styrols mit überwiegend syndiotaktischer Konfiguration dadurch herzustellen, daß man die Polymerisation mit Hilfe eines Metallocenkomplexes und einer oligomeren Methylalumoxanverbindung in einer Dispersion unter Anwendung von Scherkräften durchführt (EP-A 328 975, EP-A 379 128, EP-A 390 000). Die dabei erhaltenen Polymerisate des Styrols weisen Teilchengrößen von etwa 0,3 mm auf. Die in diesen Offenlegungsschriften beschriebenen Verfahren zur Herstellung von syndiotaktischem Polystyrol lassen sich kontinuierlich durchführen und zeichnen sich u.a. durch einen reduzierten Energieverbrauch aus.

Es wurde aber festgestellt, daß bei den beschriebenen Verfahren zur Herstellung von syndiotaktischen Polymerisaten des Styrols immer wieder Schwierigkeiten durch teilweise Adhaesion der Polymerisate an der Wand des Reaktors auftreten, was eine verringerte Abfuhr der Polymerisationswärme und einen deutlichen Anstieg der Viskosität der Dispersion zur Folge hat, so daß die Polymerisation von Zeit zur Zeit unterbrochen werden muß. Weiterhin wurde beobachtet, daß das erhaltene syndiotaktische Polymerisat des Styrols aufgrund des Vorliegens von größeren Mengen nicht umgesetzter Monomerer sowie von Katalysatorresten nicht ausreichend fließfähig ist und bei manchen Verarbeitungsprozessen aufquillt. Darüber hinaus weisen die dabei erhaltenen syndiotaktischen Polymerisate des Styrols keine einheitliche Form auf.

Aufgabe der vorliegenden Erfindung war es daher, den geschilderten Nachteilen abzuhelfen und ein neuartiges Polymerisat, enthaltend syndiotaktisches Polystyrol, herzustellen. Darüber hinaus erstreckt sich die Aufgabe der vorliegenden Erfindung auch auf ein neues Verfahren zur Herstellung derartiger Polymerisate.

Demgemäß wurden die eingangs beschriebenen Polystyrolmischungen gefunden.

Die erfindungsgemäßen Polystyrolmischungen enthalten

a) 80 bis 99 Gew.-%, vorzugsweise 92 bis 98 Gew.-% eines syndiotaktischen Homopolymerisats des Styrols oder eines Copolymerisats aus Styrol und weiteren, einpolymerisierten ungesättigten Comonomeren, und

b) 1 bis 20 Gew.-%, vorzugsweise 2 bis 8 Gew.-% eines Blockcopolymerisats aus wenigstens zwei Monomerblöcken oder eines sternförmiges Blockcopolymerisats aus vinylaromatischen Monomeren einerseits und einem konjugierten Dien oder tert. Butyl-Styrol andererseits. Die Gew.-% des syndiotaktischen Homopolymerisats a) und des Blockcopolymerisats b) sollen sich dabei zu insgesamt 100 Gew.-% ergänzen.

Vorzugsweise enthalten die erfindungsgemäßen Polystyrolmischungen ein syndiotaktisches Homopolymerisat des Styrols a). Unter der Bezeichnung Styrol sollen dabei auch übliche Derivate des Styrols wie beispielsweise 2-Methylstyrol, 3-Methylstyrol, 4-Methylstyrol, $\alpha$-Methylstyrol oder tert.-Butylstyrol verstanden werden. Für den Fall, daß es sich beim Polymerisat a) um ein Copolymerisat des Styrols mit weiteren, einpolymerisierten ungesättigten Comonomeren handelt, werden als solche insbesondere $C_2$-$C_{10}$-Alk-1-ene wie Ethylen, Propylen, But-1-en, Pent-1-en, Hex-1-en, 4-Methylpent-1-en oder Derivate der Acrylsäure oder der Methacrylsäure, beispielsweise Ester dieser Säuren oder Acrylnitril verwendet. Der Anteil der einpolymerisierten Comonomere liegt dabei üblicherweise bei 2 bis 98 Gew.-%, insbesondere bei 10 bis 70 Gew.-%, bezogen auf das Gesamtgewicht des Copolymerisats.

Beim Blockcopolymerisat b) der erfindungsgemäßen Polystyrolmischung handelt es sich um ein Blockcopolymerisat aus wenigstens zwei Monomerblöcken oder um ein sternförmiges Blockcopolymerisat aus vinylaromatischen Monomeren einerseits und einem konjugierten Dien oder tert. Butyl-Styrol andererseits. Vorzugsweise enthalten die Blockcopolymerisate zwei bis 7, insbesondere zwei oder drei Monomerblöcke.

Als vinylaromatische Monomere werden im Blockcopolymerisat b) neben Styrol auch Derivate des Styrols wie beispielsweise 2-Methylstyrol, 3-Methylstyrol, 4-Methylstyrol, $\alpha$-Methylstyrol oder tert. Butylstyrol verwendet, wobei Styrol bevorzugt wird. Als konjugiertes Dien werden im Blockcopolymerisat b) insbesondere Butadien, Isopren oder Dimethylbutadien, Hexadien sowie dessen Hydrierungsderivate eingesetzt, wobei Butadien und Isopren bevorzugt sind.

Vorzugsweise enthält das Blockcopolymerisat b) 5 bis 50 Gew.-%, insbesondere 10 bis 40 Gew.-% der vinylaromatischen Monomere einerseits und 50 bis 95 Gew.-%, insbesondere 60 bis 90 Gew.-% eines konjugierten Diens oder eines tert. Butyl-Styrols andererseits. Die Doppelbindungen der konjugierten Diene können im Blockcopolymerisat b) sowohl vollständig als auch teilweise durch Wasserstoff gesättigt sein.

Die in der erfindungsgemäßen Polystyrolmischung vorliegenden Blockcopolymerisate b) weisen übliche Molmassen von 50 000 bis 450 000 (Viskositätsmittel), insbesondere von 100 000 bis 250 000 auf. Die Bestimmung des Viskositätsmittels erfolgt üblicherweise in Trichlorbenzol bei 135 °C.

Die Herstellung derartiger Blockcopolymerisate b) erfolgt nach üblichen Methoden, beispielsweise durch anionische Polymerisation der dabei verwendeten Monomere. Mögliche Herstellungsverfahren sind u.a. in der US-A 4 871 814 beschrieben.

Mit Hilfe der Blockcopolymerisate b) lassen sich die erfindungsgemäßen Polystyrolmischungen herstellen.

Nach dem dabei bevorzugt angewandten Verfahren polymerisiert man Styrol, gegebenenfalls zusammen mit weiteren ungesättigten Comonomeren in Anwesenheit

(I) einer organischen Flüssigkeit, in der Homo- und Copolymerisate des Styrols unlöslich sind,

(II) eines Blockcopolymerisats b) aus wenigstens zwei Monomerblöcken oder eines sternförmigen Blockcopolymerisats aus vinylaromatischen Monomeren einerseits und einem konjugierten Dien oder tert. Butyl-Styrol andererseits,

(III) und eines Metallocenkomplexes von Metallen der IV. und V. Nebengruppe des Periodensystems sowie oligomeren Alumoxanverbindungen,

bei einer Temperatur von 20 bis 150 °C und unter einem Druck von 0 bis 100 bar.

Vorzugsweise erfolgt die Polymerisation des Styrols sowie gegebenenfalls der weiteren ungesättigten Comonomere bei einer Temperatur von 40 bis 90 °C und unter einem Druck von 5 bis 20 bar.

Als organische Flüssigkeiten (I), in denen die Homo- und Copolymerisate des Styrols unlöslich sind, verwendet man nach dem ebenfalls erfindungsgemäßen Verfahren insbesondere inerte Kohlenwasserstoffe wie beispielsweise Propan, Butan, Pentan, Hexan, Heptan oder Isopentan, wobei Pentan und Hexan bevorzugt eingesetzt werden.

Bei den Blockcopolymerisaten b) (II) handelt es sich um die Blockcopolymerisate b) der erfindungsgemäßen Polystyrolmischungen.

Nach dem erfindungsgemäßen Verfahren bevorzugte Metallocenkomplexe (III) sind Verbindungen der folgenden Formel (A):

$(Cp)_{n1}M\ X_{n2}\ R_{n3}$ (A),

wobei

Cp für einen substituierten oder unsubstituierten Cyclopentadienylrest,

M für Titan oder Zirkonium

X für Fluor, Chlor, Brom oder Jod

und

R für einen $C_1$-$C_8$-Alkyl-, für einen $C_1$-$C_8$-Oxoalkylrest oder einen $C_6$-$C_{10}$-Oxoarylrest steht,

und

$n_1$, $n_2$ und $n_3$ jeweils eine ganze Zahl oder 0 bedeuten und den folgenden Bedingungen gehorchen:

$$n_1 \geqq 1$$
$$n_2 = 0 \text{ bis } 3$$
$$n_3 = 0 \text{ bis } 3$$
$$n_1 + n_2 + n_3 = 4.$$

Bevorzugte Metallocenkomplexe (III) sind Verbindungen, bei denen M für Titan, X für Chlor oder Brom, R für einen $C_1$-$C_4$-Alkyl- oder für einen $C_1$-$C_4$-Oxoalkylrest, insbesondere für einen Methyl- oder einen Oxomethylrest, $n_1$ für die Zahl 1 oder 2 und $n_2$ und $n_3$ jeweils für die Zahlen 0 oder 2 oder 3 stehen, beispielsweise Cyclopentadienyltitantrichlorid oder Cyclopentadienyltitanmonomethyldichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan oder Zirkonium bevorzugt ist. Beispiele für entsprechende Herstellungsverfahren sind u.a. im Journal of Organometallic Chemistry, 369 (1989), 359-370 beschrieben. Derartige Metallocenkomplexe sind u.a. auch aus der EP-A 224 097, der EP-A 276 801, der EP-A 275 943 und der EP-A 417 313 bekannt.

Neben den Metallocenkomplexen enthalten die zur Herstellung der erfindungsgemäßen Polystyrolmischungen eingesetzten Katalysatorsysteme (III) noch oligomere Alumoxanverbindungen. Geeignet sind beispielsweise offenkettige oder cyclische Alumoxanverbindungen der allgemeinen Formeln (B) oder (C)

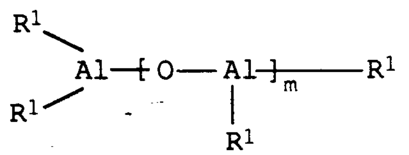

(B)

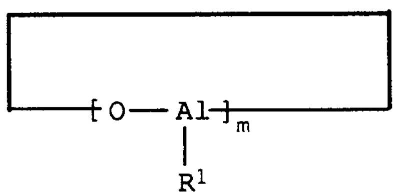

(C)

wobei $R^1$ eine $C_1$- bis $C_4$-Alkylgruppe, bevorzugt eine Methyl- oder Ethylgruppe bedeutet und m für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1, liegt.

Die Metallocenkomplexe von Metallen der IV. und V. Nebengruppe des Periodensystems und die oligomere Alumoxanverbindung werden nach dem erfindungsgemäßen Verfahren zur Herstellung der Polystyrolmischungen als Katalysatorsystem eingesetzt. Das erfindungsgemäße Verfahren stellt letztlich eine Dispersionspolymerisation dar, wobei die organische Flüssigkeit (I) das Dispersionsmedium und das Blockcopolymerisat b) (II) das Dispersionsmittel darstellt. Das dabei entstehende syndiotaktische Homopolymerisat des Styrols bzw. das Copolymerisat des Styrols mit weiteren, einpolymerisierten ungesättigten Comonomeren ist in der organischen Flüssigkeit (I) unlöslich und fällt daher aus.

Vorzugsweise wird das erfindungsgemäße Verfahren bis zu einem Monomerumsatz von etwa 90 %, insbesondere von etwa 80 % durchgeführt. Die dabei entstehende Dispersion aus syndiotaktischem Homopolymerisat des Styrols oder aus einem Copolymerisat des Styrols mit weiteren einpolymerisierten, ungesättigten Comonomeren a) sowie dem Blockcopolymerisat b) in der organischem Flüssigkeit weist einen Feststoffgehalt von 20 bis 60 Gew.-%, insbesondere von 40 bis 60 Gew.-% auf.

Weiterhin ist es möglich, das erfindungsgemäße Verfahren in der Weise abzuwandeln, daß das syndiotaktische Homopolymerisat des Styrols oder das Copolymerisat des Styrols mit weiteren einpolymerisierten, ungesättigten Comonomeren nach Beendigung der Polymerisation von der organischen Flüssigkeit (I) dem Blockcopolymerisat b (II), und dem Metallocenkomplex sowie der oligomeren Alumoxanverbindung (III) abgetrennt wird. Dies erfolgt nach üblichen Methoden der Kunststofftechnologie, beispielsweise durch Waschen mit Säuren oder mit Alkaliverbindungen.

Die auf diese Weise erhältlichen syndiotaktischen Homopolymerisate des Styrols bzw. die Copolymersate des Styrols mit weiteren einpolymerisierten, ungesättigten Comonomeren zeichnen sich u.a. durch eine

sehr einheitliche Form und eine gute Verarbeitbarkeit aus. Ihre Molmassen liegen zwischen 20 000 und 1 000 000, insbesondere zwischen 30 000 und 500 000 (Viskositätsmittel). Sie können u.a. als Folien, Fasern oder Formkörper verwendet werden.

Die ebenfalls erfindungsgemäßen Polystyrolmischungen aus dem syndiotaktischen Homopolymerisat des Styrols oder dem Copolymerisat aus Styrol und weiteren einpolymerisierten, ungesättigten Comonomeren a) einerseits und dem Blockcopolymerisat b) andererseits können durch Filtration oder Zentrifugation leicht von der organischen Flüssigkeit (I) und dem Metallocenkomplex sowie den oligomeren Alumoxanverbindungen (III) abgetrennt werden. Sie lassen sich gut verarbeiten und können u.a. für technische Artikel verwendet werden.

Beispiel und Vergleichsbeispiel

Beispiel

In einem Glaskolben mit einem Volumen von 5 Litern wurden unter Rühren 230 ml n-Hexan (getrocknet über Molekularsieb 3A), 3 g eines Blockcopolymerisats b) aus zwei alternierenden Monomerblöcken aus 40 Gew.-% Styrol und 60 Gew.-% Butadien mit einer Molmasse (Viskositätsmittel) von 250 000 und 136,8 ml Styrol (getrocknet über Molekularsieb 3A) jeweils unter Stickstoff eingebracht. Es wurde bei Raumtemperatur so lange gerührt, bis sich das Blockcopolymerisat vollständig gelöst hatte. Nach ca. 2 Stunden wurde die Temperatur im Glaskolben auf 40 °C erhöht und es wurden der Lösung 1,027 mol Cyclopentadienyltitantrichlorid und 0,0616 mol Methylalumoxan hinzugefügt. Die Polymerisation wurde bis zu einem Monomerenumsatz von 80 % durchgeführt.

Die daraus resultierende Dispersion hatte nur eine niedrige Viskosität (< 2 cp, gleich centipoise) und an der Wand des Glaskolbens waren keine Ablagerungen von Polymerisat erkennbar.

Nach Abtrennen des Blockcopolymerisats durch Ausfällen mit Ethanol erhielt man 100 g syndiotaktisches Polystyrol einer Molmasse (Viskositätsmittel) von 30 000. Unter dem Mikroskop war erkennbar, daß das erhaltene syndiotaktische Polystyrol eine sphärische Form hatte und in einer überwiegend einheitlichen Teilchengröße von 4 bis 5 µm vorlag. Der Grad der Syndiotaktizität, bestimmt durch $^{13}C$-Kernresonanzspektroskopie, lag bei 99 %.

Vergleichsbeispiel

Unter ansonsten gleichen Bedingungen wie im erfindungsgemäßen Beispiel wurde Styrol polymerisiert, wobei anstelle von Hexan als organische Flüssigkeit Toluol verwendet wurde. Darüber hinaus wurde auf die Mitverwendung des Blockcopolymerisats b) verzichtet.

Aufgrund eines starken Viskositätsanstieges mußte die Polymerisation bei einem Monomerenumsatz von 45 % abgebrochen werden. An der Glaswand zeigten sich Ablagerungen von gebildetem Polystyrol.

Das daraus erhaltene Polystyrol war nicht einheitlich geformt und wies eine Teilchengröße zwischen 0,1 und 5 mm auf. Das Polystyrol war teilweise durch Toluol aufgequollen.

## Patentansprüche

**1.** Polystyrolmischungen, umfassend
a) 80 bis 99 Gew.-% eines syndiotaktischen Homopolymerisats des Styrols oder eines Copolymerisats aus Styrol und weiteren einpolymerisierten, ungesättigten Comonomeren, und
b) 1 bis 20 Gew.-% eines Blockcopolymerisats aus wenigstens zwei Monomerblöcken oder aus einem sternförmigen Blockcopolymerisat aus vinylaromatischen Monomeren einerseits und einem konjugierten Dien oder tert. Butyl-Styrol andererseits.

**2.** Polystyrolmischungen nach Anspruch 1, wobei ein syndiotaktisches Homopolymerisat des Styrols a) eingesetzt wird.

**3.** Polystyrolmischungen nach den Ansprüchen 1 oder 2, wobei ein solches Blockcopolymerisat b) eingesetzt wird, in welchem als vinylaromatisches Monomeres Styrol verwendet wird.

**4.** Polystyrolmischungen nach den Ansprüchen 1 bis 3, enthaltend
a) 92 bis 98 Gew.-% eines syndiotaktischen Homopolymerisats des Styrols oder eines Copolymerisats aus Styrol und weiteren einpolymerisierten, ungesättigten Comonomeren, und

b) 2 bis 8 Gew.-% eines Blockcopolymerisats aus wenigstens zwei Monomerblöcken oder eines sternförmigen Blockcopolymerisats aus vinylaromatischen Monomeren einerseits und einem konjugierten Dien oder tert. Butyl-Styrol andererseits.

**5.** Polystyrolmischungen nach den Ansprüchen 1 bis 4, enthaltend ein solches Blockcopolymerisat b), welches aus zwei oder drei Monomerblöcken besteht.

**6.** Polystyrolmischungen nach den Ansprüchen 1 bis 5, enthaltend ein Blockcopolymerisat b) aus 5 bis 50 Gew.-% eines vinylaromatischen Monomeren einerseits und 50 bis 95 Gew.-% eines konjugierten Diens oder eines tert. Butyl-Styrols andererseits.

**7.** Polystyrolmischungen nach den Ansprüchen 1 bis 6, enthaltend ein Blockcopolymerisat b), wobei als konjugiertes Dien Butadien oder Isopren verwendet wird.

**8.** Verfahren zur Herstellung von Polystyrolmischungen gemäß einem der Ansprüche 1 bis 7, dadurch gekennzeichnet, daß man Styrol sowie gegebenenfalls weitere ungesättigte Comonomere in Anwesenheit

(I) einer organischen Flüssigkeit, in der Homo- und Copolymerisate des Styrols unlöslich sind,

(II) eines Blockcopolymerisats b) aus wenigstens zwei Monomerblöcken oder eines sternförmigen Blockcopolymerisats aus vinylaromatischen Monomeren einerseits und einem konjugierten Dien oder tert. Butyl-Styrol andererseits,

(III) und eines Metallocenkomplexes von Metallen der IV. und V. Nebengruppe des Periodensystems sowie oligomeren Alumoxanverbindungen,

bei einer Temperatur von 20 bis 150 °C und unter einem Druck von 0 bis 100 bar polymerisiert.

**9.** Verfahren nach Anspruch 8, dadurch gekennzeichnet, daß die Polymerisation des Styrols sowie gegebenenfalls der weiteren ungesättigten Comonomere bei einer Temperatur von 40 bis 90 °C und unter einem Druck von 5 bis 20 bar ausgeführt wird.

**10.** Verfahren nach den Ansprüchen 8 oder 9, dadurch gekennzeichnet, daß als Metallocenkomplexe (III) Verbindungen der folgenden Formel (A) verwendet werden:

$$(Cp)_{n1}M\,X_{n2}\,R_{n3} \qquad (A),$$

wobei

Cp für einen substituierten oder unsubstituierten Cyclopentadienylrest,

M für Titan oder Zirkonium

X für Fluor, Chlor, Brom oder Jod

und

R für einen $C_1$-$C_8$-Alkyl- oder für einen $C_1$-$C_8$-Oxoalkylrest steht,

und

$n_1$, $n_2$ und $n_3$ jeweils eine ganze Zahl oder 0 bedeuten und den folgenden Bedingungen gehorchen:

$n_1 \geqq 1$

$n_2 = 0$ bis 3

$n_3 = 0$ bis 3

$n_1 + n_2 + n_3 = 4$.

**11.** Verfahren zur Herstellung eines syndiotaktischen Homopolymerisats des Styrols oder eines Copolymerisats aus Styrol und weiteren einpolymerisierten, ungesättigten Comonomeren, dadurch gekennzeichnet, daß nach Beendigung der Verfahrensschritte nach den Ansprüchen 8 bis 10 die syndiotaktischen Homopolymerisate des Styrols oder die Copolymerisate des Styrols mit weiteren einpolymerisierten, ungesättigten Comonomeren von der organischen Flüssigkeit (I) dem Blockcopolymerisat b, (II) und dem Metallocenkomplex sowie der oligomeren Aluminiumoxidverbindung (III) abgetrennt werden.

**12.** Homopolymerisate des Styrols oder Copolymerisate des Styrols mit weiteren, einpolymerisierten, ungesättigten Comonomeren, erhältlich nach dem Verfahren gemäß Anspruch 11.

13. Verwendung der Polymerisate des Styrols gemäß Anspruch 12 als Folien, Fasern oder Formkörper.